# EUROPEAN PATENT SPECIFICATION

(11) **EP 4 737 743 B1**
(45) Date of publication and mention of the grant of the patent: **26.08.2026**
(21) Application number: 24210361.2
(22) Date of filing: 01.11.2024
(51) Int. Cl.: F16B 5/02, F16B 5/06, F16B 37/08, F16B 41/00

(54) **A SCREW JOINT ARRANGEMENT AND A DEVICE COMPRISING AT LEAST ONE SCREW JOINT ARRANGEMENT**
SCHRAUBVERBINDUNGSANORDNUNG UND VORRICHTUNG MIT MINDESTENS EINER SCHRAUBVERBINDUNGSANORDNUNG
AGENCEMENT DE JOINT À VIS ET DISPOSITIF COMPRENANT AU MOINS UN AGENCEMENT DE JOINT À VIS

(43) Date of publication of application: 06.05.2026
(73) Proprietor: Axis AB, 223 69 Lund (SE)
(72) Inventor: ANDERSSON, Karl, 223 69 Lund (SE)
(74) Representative: AWA Sweden AB

(56) References cited:
- DE-A1- 4 243 097
- US-A1- 2005 117 997

## Description

### Field of the invention

The present invention relates to a screw joint arrangement and a device comprising at least one such screw joint arrangement. More specifically, the invention relates to a screw joint arrangement for securing a first member and a second member to each other.

### Background art

Screw joint arrangements are often used for securing two members to each other by means of a screw.

A common problem associated with screw joint arrangements is the risk of the screw falling off during handling.

It is known to provide a screw joint arrangement with some sort of retainer function in order to secure the screw to one of the members. One such solution is disclosed in DE4243097A1

A certain type of screw joint arrangement may allow the position of the two members relative to each other to be adjusted by loosening and retightening of the screw joint arrangement.

A problem associated with a screw joint arrangement of this type is the risk of the screw falling off during the adjustment process, which may be cumbersome especially if the screw joint arrangement is used in an application arranged at a position which is difficult to access. An example may be a surveillance camera provided with such a screw joint arrangement and arranged in the ceiling of a room.

There consequently exists a need for an improved screw joint arrangement which provides a retainer function for the screw while also allowing adjustment of the position of the two members relative each other.

### Summary of the invention

In view of that stated above, it is an object of the present invention to provide a screw joint arrangement having a retainer function for the screw and also allowing for adjustment of the position between two members secured to each other by means of the screw joint arrangement.

It is also an object to provide a device comprising at least two such screw joint arrangements.

To achieve at least one of the above objects and also other objects that will be evident from the following description, a screw joint arrangement having the features defined in claim 1 and a device according to claim 11 are provided according to the present invention. Preferred embodiments will be evident from the dependent claims.

More specifically, there is provided according to a first aspect of the present invention a screw joint arrangement comprising:
a first member provided with at least one screw receiving portion;
a second member provided with a bore comprising a first threaded bore portion, a second threaded bore portion, and a non-threaded bore portion separating the first threaded bore portion and the second threaded bore portion; and
a screw comprising a screw head and a screw shaft provided with a threaded screw portion,
the first member being arranged next to the second member with the first threaded bore portion of the bore of the second member being proximal to the first member, and
the screw joint arrangement being settable, by rotation of the screw, between a first state in which the second member is fixed relative to the first member, and a second state in which the second member is movable relative to the first member,
wherein, in said first state, one of the at least one screw receiving portion of the first member and the bore of the second member are aligned, and the screw shaft extends through said one of the at least one screw receiving portion and into the bore with the threaded screw portion engaging the second threaded bore portion such that the first member is clamped between the screw head and the second member, and
wherein, in said second state, the screw shaft extends through the first threaded bore portion of the bore and the threaded screw portion of the screw shaft is positioned in the non-threaded bore portion of the bore.

Hereby an improved screw joint arrangement is provided.

The screw joint arrangement is settable by rotation of the screw between the first state and the second state.

The first and second member are fixed relative to each other in the first state of the screw joint arrangement. More specifically, in the first state one of the at least one screw receiving portion of the first member and the bore of the second member are aligned, and the screw shaft extends through said one of the at least one screw receiving portion and into the bore with the threaded screw portion engaging the second threaded bore portion such that the first member is clamped between the screw head and the second member. Consequently, the first member and the second member may be securely fixed to each other by setting the screw joint arrangement in said first state, i.e. by tightening of the screw.

The second member is movable relative to the first member in the second state of the screw joint arrangement. More specifically, in the second state the screw shaft extends through the first threaded bore portion of the bore and the threaded screw portion of the screw shaft is positioned in the non-threaded bore portion of the bore. Hereby, the first member will not be clamped between the second member and the screw head while the threaded screw portion of the screw shaft will be trapped in the non-threaded bore portion of the bore between the first threaded bore portion and the second threaded bore portion. Consequently, the relative position between the first and second member may be adjusted when the screw joint arrangement is set in the second state, i.e. by loosening of the screw, while it is ensured that the screw cannot fall off.

According to an embodiment, the non-threaded bore portion of the bore may have a first length L1 and the threaded screw portion of the screw shaft may have a second length L2, the first length L1 of the non-threaded bore portion being greater than the second length L2 of the threaded screw portion. Hereby it may be ensured that the threaded screw portion of the screw shaft may be readily trapped in the non-threaded bore portion of the bore when setting the screw joint arrangement in the second state.

According to another embodiment, the first member may comprise two screw receiving portions and the second member, in said second state of the screw joint arrangement, may be movable relative to the first member between a first position in which a portion of the screw shaft is positioned in one of said two screw receiving portions and a second position in which the portion of the screw shaft is positioned in the other of said two screw receiving portions. Hereby the position of the first and second member relative to each other may be adjusted when the screw joint arrangement is in the second state such that second member may be moved between the first position, in which one of the two screw receiving portions is aligned with the bore of the first member, and the second position in which the other of the two screw receiving portions is aligned with the bore of the first member.

Each of the two screw receiving portions may be provided with a lateral opening and the second member, in said second state of the screw joint arrangement, may be movable relative to the first member between the first position and the second position by rotation about an axis.

The first member may comprise a peripheral portion comprising a first C-shaped section and a second C-shaped section which are faced towards each other and separated by a curved section, and the first and second C-shaped sections may form said two screw receiving portions.

According to yet another embodiment, the bore may be formed as an insert arranged in a through hole provided in the second member.

The insert may comprise a first part provided with the first threaded bore portion and a second part provided with the second threaded bore portion, and wherein the insert may be assembled by concentric insertion of one of the first and second parts into the other of the first and second parts.

By providing the bore in the form of an insert, it is possible to form the first and second bore portions of the bore in a first material, such as a metal material, and to form the second member of a second material, such as a plastic material.

The insert may be arranged in the through hole by a mould-in process.

The insert may be provided with a profiled or stepped outer envelope surface. This may facilitate anchoring the insert in the second member when the insert is arranged in the trough hole by a mould-in process.

According to a second aspect of the present invention, a device is provided comprising at least one screw joint arrangement according to the above described type.

According to an embodiment, the device may be a camera device.

The first member may form part of a camera body of the camera device and the second member may form part of a lens holder unit of the camera device. By setting the at least one screw joint arrangement in the second state, the second member, i.e. the lens holder unit, may be moved relative to the first member, i.e. the camera body, which may be used for changing format orientation of the camera device, such as changing from corridor format orientation to landscape format orientation by turning the camera view by 90 degrees.

The first member, in said second state of the screw joint arrangement, may be movable relative to the first member between the first position and the second position by rotation about an axis corresponding to an optical axis of the lens holder unit.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig.1a is a cross sectional view of a first member of a screw joint arrangement according to a first embodiment.
Fig. 1b is a cross sectional view of a second member of a screw joint arrangement according to the first embodiment.
Fig. 1c is a side view of a screw of a screw joint arrangement according to the first embodiment.
Fig. 2a is a cross sectional view of a screw joint arrangement according to the first embodiment set in a first state.
Fig. 2b is a cross sectional view of a screw joint arrangement according to the first embodiment set in a second state.
Fig. 3 is a perspective view of the screw joint arrangement shown in Fig. 2b.
Fig. 4 is a cross sectional view of a structure comprising a first and a second screw joint arrangement according to a second embodiment.
Fig. 5a is a plan view of a first member of a screw joint arrangement according to the second embodiment.
Fig. 5b is a cross sectional view of the a first member shown in Fig. 5a.
Fig. 6a is a perspective view of a second member of a screw joint arrangement according to the second embodiment.
Fig. 6b is a cross sectional view of the a second member shown in Fig. 6a.
Fig. 7a is a cross sectional element of a screw and an insert for a screw joint arrangement according to the second embodiment.
Fig. 7b is a perspective view in exploded form of the insert shown in Fig. 7a.
Fig. 8 is a side view of a camera device.
Fig. 9 is side view illustrating a part of the camera device shown in Fig. 8.

### Description of embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

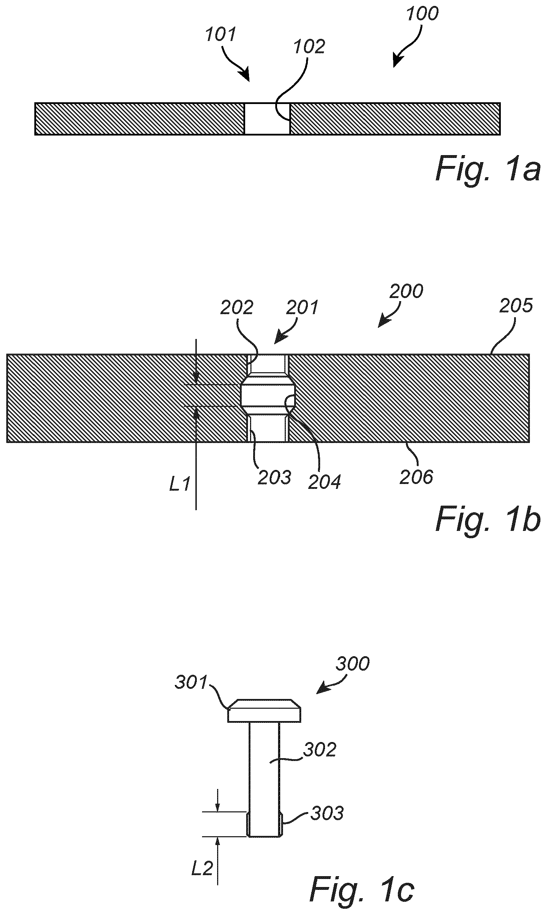

In Figs. 1a-1c, to which reference is made, a first member 100, a second member 200 and a screw 300 of a screw joint arrangement 1 according to a first embodiment are illustrated.

The first member 100, which is shown in Fig. 1a, may form part of a larger structure and may also have any suitable form. In the shown embodiment, the first member 100 may be formed as a circular plate.

The first member 100 is provided with at least one screw receiving portion 101. In the shown embodiment, the first member is 100 provided with one centrally arranged screw receiving portion 101 in the form of a through hole 102.

The second member 200, which is shown in Fig. 1b, may form part of a larger structure and may also have any suitable form. In the shown embodiment, the second member 200 may be formed as a rectangular plate.

The second member 200 is provided with a bore 201 comprising a first threaded bore portion 202, a second threaded bore 203 portion, and a non-threaded bore portion 204 separating the first threaded bore portion 202 and the second threaded bore portion 203. In the shown embodiment, the bore 201 is a through bore which is centrally arranged and extending between a top surface 205 of the rectangular plate and a bottom surface 206 of the rectangular plate.

The non-threaded bore portion 204 of the bore 201 may have a first length L1.

The screw 300, which is shown in Fig. 1c, comprises a screw head 301 and a screw shaft 302 provided with a threaded screw portion 303. In the shown embodiment, the threaded screw portion 303 is arranged at a distal end of the screw shaft 302.

The threaded screw portion 303 of the screw shaft 302 may have a second length L2.

The first length L1 of the non-threaded bore 204 portion may be greater than the second length L2 of the threaded screw portion 303.

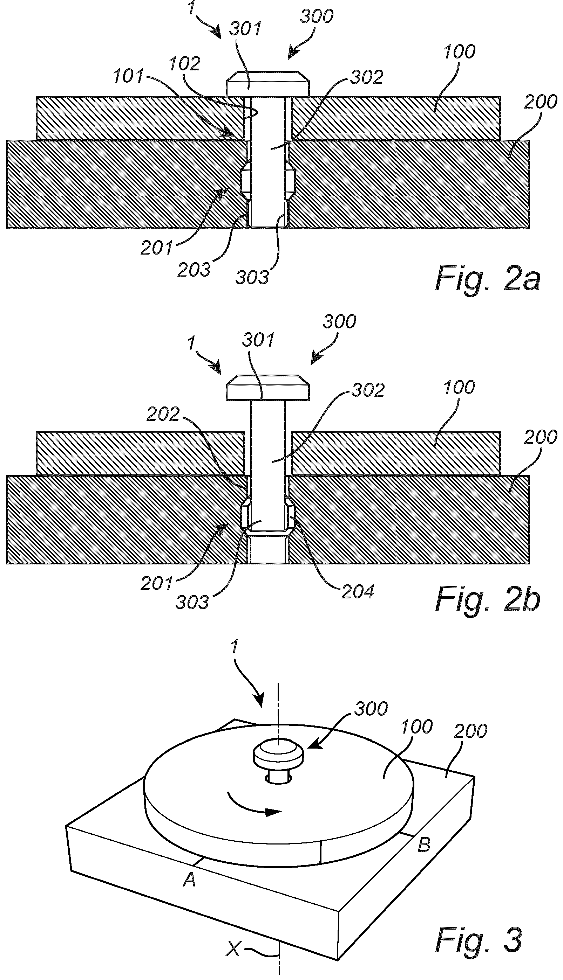

Figs. 2a and 2b, to which reference now is made, illustrate the screw joint arrangement 1 according to the first embodiment in an assembled state.

The first member 100 is arranged next to the second member 200 with the first threaded bore portion 202 of the bore 201 of the second member 200 being proximal to the first member 100.

In the shown embodiment, the first member 100 is arranged on top of the second member 200 with the screw receiving portion 101 in the form of a through hole 102 of the first member 100 aligned with the bore 201 of the second member 200.

The screw 300 is arranged in the through hole 102 and the bore 201 such that the first member 100 is arranged between the screw head 301 and the second member 200.

The screw joint arrangement 1 is settable, by rotation of the screw 300, between a first state in which the second member 200 is fixed relative to the first member 100, and a second state in which the second member 200 is movable relative to the first member 100.

In said first state, which is illustrated in Fig. 2a, one of the at least one screw receiving portion 101 of the first member 100 and the bore 201 of the second member 200 are aligned, and the screw shaft 302 extends through said one of the at least one screw receiving portion 101 and into the bore 201 with the threaded screw portion 303 engaging the second threaded bore portion 203 such that the first member 100 is clamped between the screw head 301 and the second member 200. In the shown embodiment, the first member 100 comprises only one screw receiving portion 101 in the form of a through hole 102, and consequently it is the through hole 102 which is aligned with the bore 201 of the second member 200.

The first state may be obtained by rotation of the screw 300 for tightening of the screw joint arrangement 1 such that the second member 200 becomes fixed relative to the first member 100.

In said second state, which is illustrated in Fig. 2b, the screw shaft 302 extends through the first threaded bore portion 202 of the bore 201 and the threaded screw portion 303 of the screw shaft 302 is positioned in the non-threaded bore portion 204 of the bore 201.

The fact that the length L1 of the non-threaded bore portion 204 of the bore 201 is greater than the second length L2 of the threaded screw portion 303 of the screw shaft 302 ensures that the threaded screw portion 303 of the screw shaft 302 may be completely contained within the non-threaded bore portion 204 of the bore 201.

The second state may be obtained by rotation of the screw 300 for loosening of the screw joint arrangement 1 such that the first member 100 no longer is clamped between the screw head 301 and the second member 200, whereby it becomes possible to move the second member 200 relative to the first member 100.

In Fig. 3, to which reference now is made, the screw joint arrangement 1 according to the first embodiment is shown in the second state thereof.

As mentioned above, in the second state, the second member 200 is movable relative to the first member 100. In the shown embodiment, this relative movability enables rotation of the first member 100 about an axis X such that a marking of the first member 100 may be moved from a first position A to a second position B indicated on the second member 200.

In the shown embodiment, the screw receiving portion 101 in the form of a through hole 102 of the first member 100 remains aligned with the bore 201 of the second member 200 during rotation of the first member 100.

When the screw joint arrangement 1 is set in the second state, the threaded screw portion 303 of the screw shaft 302 becomes trapped in the non-threaded bore portion 204 of the bore 201 between the first threaded bore portion 202 and the second threaded bore portion 203. Consequently, the relative position between the first and second members 100, 200 may be adjusted when the screw joint arrangement 1 is set in the second state, i.e. by loosening of the screw 300, while it is ensured that the screw 300 cannot fall off.

Should it be desired to completely remove the screw 300 from the screw joint arrangement 1, this is enabled by using the first threaded bore portion 202 of the bore 201, i.e. by unscrewing the screw 300 with the threaded screw portion 303 of the screw shaft 302 threadedly engaging the first threaded bore portion 202 of the bore 201.

As mentioned above, the screw joint arrangement may comprise more than one screw receiving portion. Also, the inventive screw joint arrangement may be used together with additional screw joint arrangements.

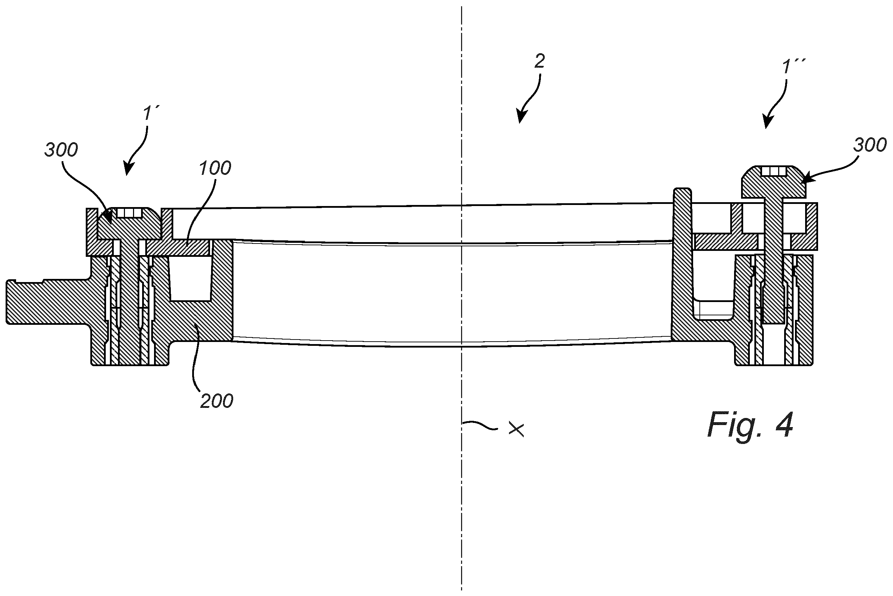

In Fig. 4, to which reference now is made, a structure 2 is shown comprising a first screw joint arrangement 1' and a second screw joint arrangement 1" according to a second embodiment, wherein each of the first and second screw joint arrangements 1', 1" comprises two screw receiving portions.

The structure 2 comprises a first member 100, a second member 200 and two screws 300.

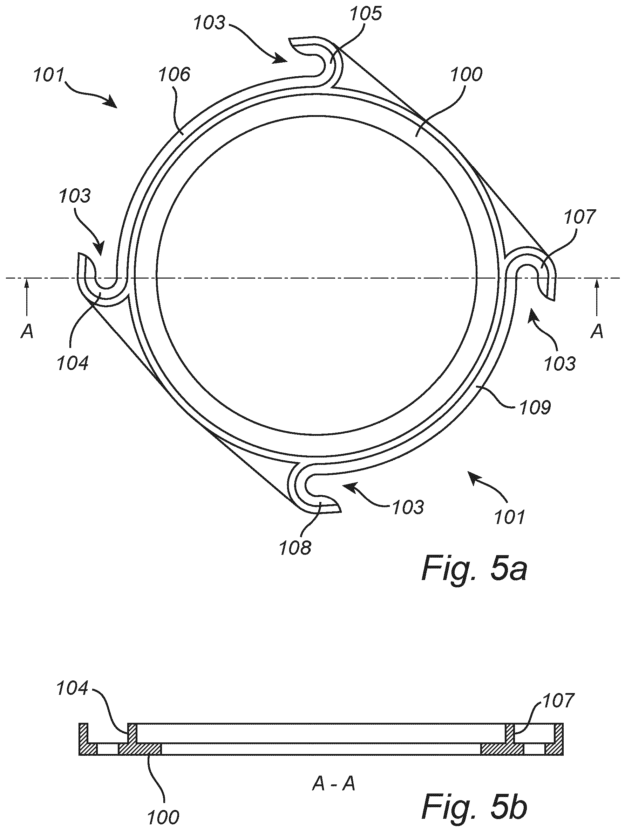

The first member 100, which is shown more in detail in Figs. 5a, b, has an annular shape and comprises a first pair of screw receiving portions 101 of the first screw joint arrangement 1' and a second pair of screw receiving portions 101 of the second screw joint arrangement 1". Consequently, the first member 100 of the first screw joint arrangement 1' is formed integral with the first member 100 of the second screw joint arrangement 1", i.e. the two screw joint arrangements 1', 1" share a common first member 100.

Each screw receiving portion 101 is provided with a lateral opening 103. More specifically, each screw receiving portion 103 is formed as a C-shaped section arranged at a peripheral portion of the first member 100.

The screw receiving portions 101 of the first screw joint arrangement 1' comprise a first C-shaped section 104 and a second C-shaped section 105 which are faced towards each other and separated by a curved section 106.

Correspondingly, the screw receiving portions 101 of the second screw joint arrangement 1" comprises a first C-shaped section 107 and a second C-shaped section 108 which are faced towards each other and separated by a curved section 109.

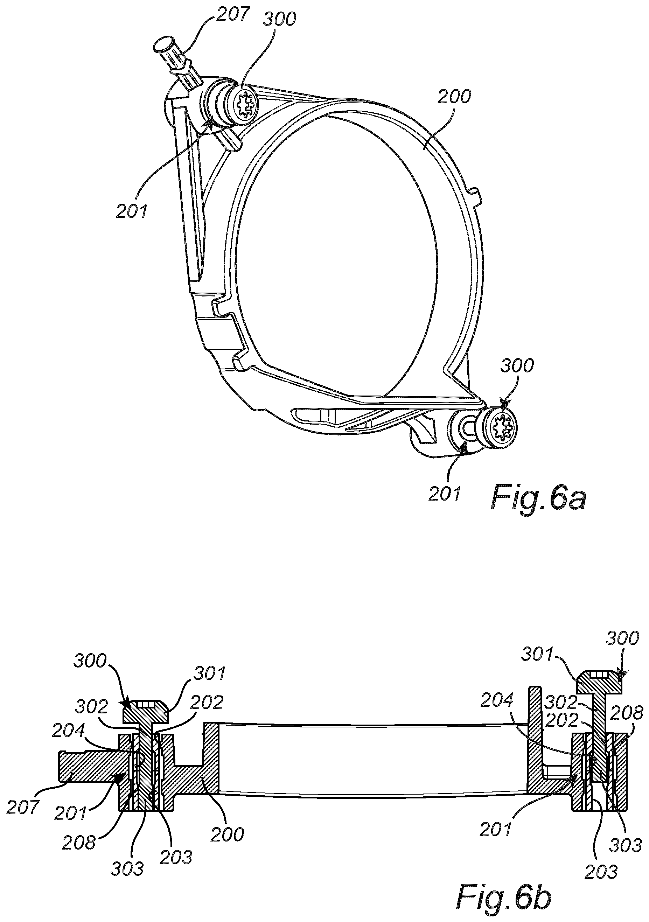

The second member 200, which is shown more in detail in Figs. 6a, b, has an annular shape; and is provided with a bore 201 of the first screw joint arrangement 1' in a peripheral portion of the second member 200 and with a bore 201 of the second screw joint arrangement 1" in an opposing peripheral portion of the second member 200.

Each bore 201 comprises a first threaded bore portion 202, a second threaded bore portion 203, and a non-threaded bore portion 204 separating the first threaded bore portion 202 and the second threaded bore portion 203.

The non-threaded bore portion 204 of each bore 201 may have a first length L1.

In the shown embodiment, a lever 207 is arranged in the peripheral portion comprising the bore 201 of the first screw joint arrangement 1'. The lever 207 extends outwards in a radial direction.

The second member 200 of the first screw joint arrangement 1' is formed integral with the second member 200 of the second screw joint arrangement 1", i.e. the two screw joint arrangements 1', 1" share a common second member 200.

A screw 300 is arranged in each bore 201. Each screw 300 comprises a screw head 301 and a screw shaft 302 provided with a threaded screw portion 303. In the shown embodiment, the threaded screw portion 303 is arranged at a distal end of the screw shaft 302.

The threaded screw portion 303 of each screw shaft 302 may have a second length L2.

The first length L1 of the non-threaded bore portion 204 may be greater than the second length L2 of the associated threaded screw portion 303.

In the shown embodiment, each bore 201, i.e. both the bore of the first screw joint arrangement 1' and the bore of the second screw joint arrangement 1", is formed as an insert 208 arranged in a respective through hole 209 provided in the second member 200.

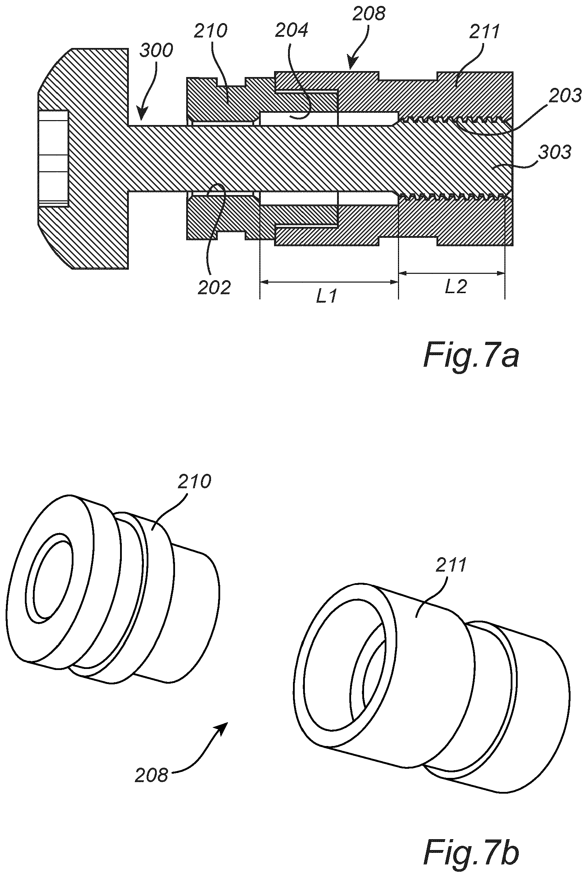

The insert 208 is shown in more detail in Figs 7a, b.

Each insert 208 comprises a first part 210 provided with the first threaded bore portion 202 and a second part 211 provided with the second threaded bore portion 203. The insert 208 is assembled by concentric insertion of one of the first and second 210, 211 parts into the other of the first and second parts 210, 211. In the shown embodiment, the first part 210 is concentrically partly insertable into the second part 211.

Each insert 208 may be arranged in the respective through hole 209 by a mould-in process. The insert 208 may be provided with a profiled or stepped outer envelope surface in order to facilitate anchoring the insert 208 in the second member 200 when the insert 208 is arranged in the trough hole 209 by a mould-in process.

The insert 208 may be made of metal.

The second member 200 may be made of a plastic material.

As shown in Fig. 4, the first member 100 is arranged next to the second member 200 such that the first threaded bore portion 202 of the bore 201 of both the first screw joint arrangement 1' and the second screw joint arrangement 1" are proximal to the first member 100.

The first C-shaped section 104, 107 of the respective screw joint arrangement 1', 1" is aligned with its associated bore 201.

The screw 300 of the first screw joint arrangement 1' is shown extending with its screw shaft 302 through the associated screw receiving portion 101 in the form of the first C-shaped section 104 of the first member 100 and into the bore 201 of the second member 200. The first screw joint arrangement 1' is set in a first state in which the threaded screw portion 303 of the screw shaft 302 threadedly engages the second threaded bore portion 203 of the bore 201 such that the first member 100 is clamped between the screw head 301 and the second member 200. The first state may be obtained by rotation of the screw 300 for tightening the first screw joint arrangement 1'.

The screw 300 of the second screw joint arrangement 1" is shown extending with its screw shaft 302 through the screw receiving portion 101 in the form of the first C-shaped section 107 of the second member 200 and into the associated bore 201 of the second member 200. The second screw joint arrangement 1" is set in a second state in which the threaded screw portion 303 of the screw shaft 302 is positioned in the non-threaded bore portion 204 of the bore 201. Consequently, in the second state of the second screw joint arrangement 1", the first member 100 is not clamped between the screw head 301 and the second member 200. The second state may be obtained by rotation of the screw 300 for loosening the second screw joint arrangement 1",

As mentioned above, the first and second members 100, 200 are shared by the first and second screw joint arrangements 1', 2", and consequently it is necessary for both screw joint arrangements 1', 1" to be set in said second state for the second member 200 to be movable relative to the first member 100.

Thus, by setting the first and the second screw joint arrangement 1', 1" in said second state, the position of the second member 200 may be adjusted relative to the first member 100.

As mentioned above, each screw joint arrangement 1', 1" comprises two screw receiving portions 101 in the form of a first and a second C-shaped section 104, 105; 107, 108 facing each other. The position of the second member 200 may thus be adjusted by rotating the second member 200 about an axis X such that the screw shaft 302 of each screw joint arrangement 1', 1" is moved out of the associated first C-shaped section 104; 107 through the lateral opening 103 thereof. By continued rotation of the second member 200 relative to the first member 100, each screw shaft 302 may be caused to be moved along the curved section 106; 109 of the respective screw receiving portion 101 and to enter the associated second C-shaped section 105; 108 by entering through the lateral opening 103 thereof.

The lever 207 arranged in the peripheral portion of the second member 200 may be used for rotating the second member 200 relative to the first member 100 about said axis X.

When the position between the first and second member 100, 200 has been adjusted, the first and second screw joint arrangements 1', 1" may be set in the first state by rotating the screws 300 for tightening thereof, thereby securing the relative position between the first and second members 100, 200.

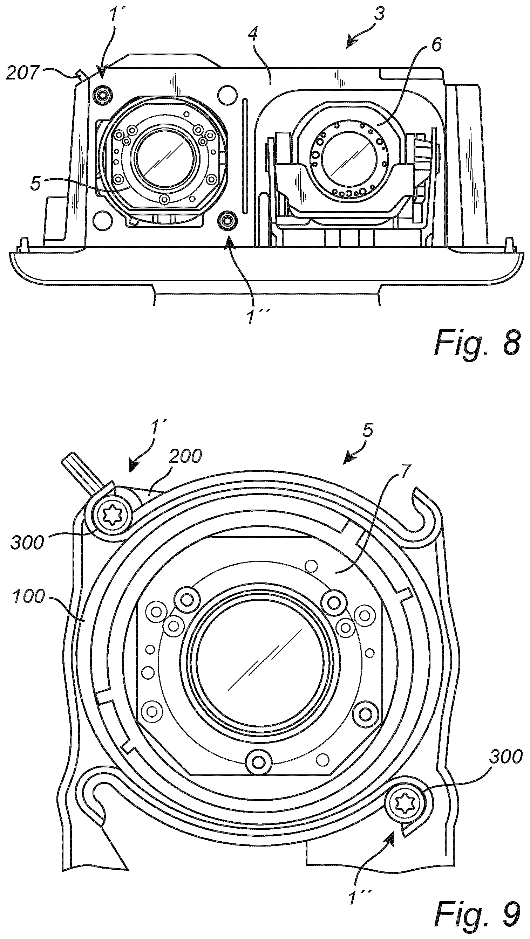

A device in the form of a camera device 3 provided with two screw joint arrangements 1', 1" of the type described above with reference to Figs. 4, 5a, b, 6a, b, 7a, b, will now be described with reference to Fig. 8. A housing of the camera device 3 has been removed in Fig. 8 for improved clarity.

The camera device 3 comprises a camera body 4 which supports a first and a second camera unit 5, 6. The first camera unit 5 (on the left side in the figure) may be rotated for changing format orientation of the camera device 3, e.g. such that the first camera unit 5 may be changed from corridor format orientation to landscape format orientation by turning the camera view by 90 degrees.

The first camera unit 5 comprises a lens holder unit 7 which is connected to the camera body 4 by means of the two screw joint arrangements 1', 1", which is shown more in detail in Fig. 9 which illustrates the first camera unit 5 with a cover plate removed for improved clarity.

The second member 200 of the two screw joint arrangements 1', 1" forms part of the lens holder unit 7. More specifically, the annularly shaped second member 200 encloses a lens barrel of the lens holder unit 7.

The first member 100 of the two screw joint arrangements 1', 1" forms part of the camera body 4.

When screw joint arrangements 1', 1" both are set in the first state, the position between the first and second member 100, 200 is locked, which means that the position between the lens holder unit 7 and the camera body 4 is secured.

When screw joint arrangements 1', 1" both are set in the second state, the position between the first and second member 100, 200 may be adjusted, which means that the lens holder unit 7 may be moved relative to the camera body 4. In the shown embodiment, this movement is a rotational movement of the second member 200 and the lens holder unit 7 about an axis corresponding to an optical axis of the lens holder unit 7, relative to the first member 100 and the camera body 4.

The fact that the threaded screw portion 303 of each screw shaft 302 is trapped inside the non-threaded bore portion 204 of the associated bore 201 in the second state of the screw joint arrangements 1', 1" in accordance with what has been described above, ensures that the position may be adjusted without the risk of the screws 300 falling off.

The lever 207 arranged on the second member 200 may be used for rotating the second member 200.

When the relative position between the lens holder unit 7 and the camera body 4 has been adjusted, the position may be once again be secured by setting the screw joint arrangements 1', 1" in the first state.

It will be appreciated that the present invention is not limited to the embodiments shown. Several modifications and variations are thus conceivable within the scope of the invention which thus is exclusively defined by the appended claims.

## Claims

1. A screw joint arrangement comprising:
a first member (100) provided with at least one screw receiving portion (101);
a second member (200) provided with a bore (201) comprising a first threaded bore portion (202), a second threaded bore portion (203), and a non-threaded bore portion (204) separating the first threaded bore portion (202) and the second threaded bore portion (203); and
a screw (300) comprising a screw head (301) and a screw shaft (302) provided with a threaded screw portion (303),
the first member (100) being arranged next to the second member (200) with the first threaded bore portion (202) of the bore (201) of the second member (200) being proximal to the first member (100), and
the screw joint arrangement being settable, by rotation of the screw (300), between a first state in which the second member (200) is fixed relative to the first member (100), and a second state in which the second member (200) is movable relative to the first member (100),
wherein, in said first state, one of the at least one screw receiving portion (101) of the first member (100) and the bore (201) of the second member (200) are aligned, and the screw shaft (302) extends through said one of the at least one screw receiving portion (101) and into the bore (201) with the threaded screw portion (303) engaging the second threaded bore portion (203) such that the first member (100) is clamped between the screw head (301) and the second member (200), and
wherein, in said second state, the screw shaft (302) extends through the first threaded bore portion (202) of the bore (201) and the threaded screw portion (303) of the screw shaft (302) is positioned in the non-threaded bore portion (204) of the bore (201).

2. The screw joint arrangement of claim 1, wherein the non-threaded bore portion (204) of the bore has (201) a first length L1 and the threaded screw portion (303) of the screw shaft (302) has a second length L2, the first length L1 of the non-threaded bore portion (204) being greater than the second length L2 of the threaded screw portion (303).

3. The screw joint arrangement of claim 1 or 2, wherein the first member (100) comprises two screw receiving portions (101) and wherein the second member (200), in said second state of the screw joint arrangement, is movable relative to the first member (100) between a first position in which a portion of the screw shaft (302) is positioned in one of said two screw receiving portions (101) and a second position in which the portion of the screw shaft (302) is positioned in the other of said two screw receiving portions (101).

4. The screw joint arrangement according to claim 3, wherein each of the two screw receiving portions (101) is provided with a lateral opening (103) and wherein the second member (200), in said second state of the screw joint arrangement, is movable relative to the first member (100) between the first position and the second position by rotation about an axis.

5. The screw joint arrangement according to claim 4, wherein the first member (100) comprises a peripheral portion comprising a first C-shaped section (104; 107) and a second C-shaped section (105; 108) which are faced towards each other and separated by a curved section (106; 109), and wherein the first and second C-shaped sections form (104, 105; 107, 108) said two screw receiving portions (101).

6. The screw joint arrangement according to any one of the preceding claims, wherein the bore (201) is formed as an insert (208) arranged in a through hole (209) provided in the second member (200).

7. The screw joint arrangement according to claim 6, wherein the insert (208) comprises a first part (210) provided with the first threaded bore portion (202) and a second part (211) provided with the second threaded bore portion (203), and wherein the insert (208) is assembled by concentric insertion of one of the first and second parts (210; 211) into the other of the first and second parts (211; 210).

8. The screw joint arrangement according to any one of claims 6-7, wherein the insert (208) is arranged in the through hole (209) by a mould-in process.

9. The screw joint arrangement according to claim 8, wherein the insert (208) is provided with a profiled or stepped outer envelope surface.

10. The screw joint arrangement according to any one of claims 6-9, wherein the insert (208) is made of metal.

11. A device comprising at least one screw joint arrangement (1; 1', 1") according to any one of the preceding claims.

12. The device according to claim 11, wherein the device is a camera device (3).

13. The device according to claim 12, wherein the first member (100) forms part of a camera body (4) of the camera device (3) and wherein the second member (200) forms part of a lens holder unit (7) of the camera device (3).

14. The device according to claim 13, wherein the first member (100), in said second state of the screw joint arrangement (1', 1"), is movable relative to the first member (100) between the first position and the second position by rotation about an axis corresponding to an optical axis of the lens holder unit (7).

## Patentansprüche

1. Schraubverbindungsanordnung, umfassend:
ein erstes Element (100), das mit mindestens einem Schraubenaufnahmeabschnitt (101) versehen ist;
ein zweites Element (200), das mit einer Bohrung (201) versehen ist, die einen ersten mit Gewinde versehenen Bohrungsabschnitt (202), einen zweiten mit Gewinde versehenen Bohrungsabschnitt (203) und einen gewindelosen Bohrungsabschnitt (204) umfasst, der den ersten mit Gewinde versehenen Bohrungsabschnitt (202) und den zweiten mit Gewinde versehenen Bohrungsabschnitt (203) voneinander trennt; und
eine Schraube (300), die einen Schraubenkopf (301) und einen Schraubenschaft (302) umfasst, der mit einem mit Gewinde versehenen Schraubenabschnitt (303) versehen ist,
wobei das erste Element (100) neben dem zweiten Element (200) angeordnet ist, wobei sich der erste mit Gewinde versehene Bohrungsabschnitt (202) der Bohrung (201) des zweiten Elements (200) proximal zum ersten Element (100) befindet, und
wobei die Schraubverbindungsanordnung durch Drehung der Schraube (300) zwischen einem ersten Zustand, in dem das zweite Element (200) relativ zum ersten Element (100) fixiert ist, und einem zweiten Zustand einstellbar ist, in dem das zweite Element (200) relativ zum ersten Element (100) bewegbar ist,
wobei in dem ersten Zustand einer des mindestens einen Schraubenaufnahmeabschnitts (101) des ersten Elements (100) und die Bohrung (201) des zweiten Elements (200) miteinander ausgerichtet sind und sich der Schraubenschaft (302) durch den einen des mindestens einen Schraubenaufnahmeabschnitts (101) in die Bohrung (201) hinein erstreckt, wobei der mit Gewinde versehene Schraubenabschnitt (303) in den zweiten mit Gewinde versehenen Bohrungsabschnitt (203) so eingreift, dass das erste Element (100) zwischen dem Schraubenkopf (301) und dem zweiten Element (200) eingespannt ist, und
wobei sich in dem zweiten Zustand der Schraubenschaft (302) durch den ersten mit Gewinde versehenen Bohrungsabschnitt (202) der Bohrung (201) erstreckt und der mit Gewinde versehene Schraubenabschnitt (303) des Schraubenschafts (302) im gewindelosen Bohrungsabschnitt (204) der Bohrung (201) positioniert ist.

2. Schraubverbindungsanordnung nach Anspruch 1, wobei der gewindelose Bohrungsabschnitt (204) der Bohrung (201) eine erste Länge L1 aufweist und der mit Gewinde versehene Schraubenabschnitt (303) des Schraubenschafts (302) eine zweite Länge L2 aufweist, wobei die erste Länge L1 des gewindelosen Bohrungsabschnitts (204) größer ist als die zweite Länge L2 des mit Gewinde versehenen Schraubenabschnitts (303).

3. Schraubverbindungsanordnung nach Anspruch 1 oder 2, wobei das erste Element (100) zwei Schraubenaufnahmeabschnitte (101) umfasst und wobei das zweite Element (200) in dem zweiten Zustand der Schraubverbindungsanordnung relativ zum ersten Element (100) zwischen einer ersten Position, in der ein Abschnitt des Schraubenschafts (302) in einem der beiden Schraubenaufnahmeabschnitte (101) positioniert ist, und einer zweiten Position bewegbar ist, in der sich der Abschnitt des Schraubenschafts (302) in dem anderen der beiden Schraubenaufnahmeabschnitte (101) befindet.

4. Schraubverbindungsanordnung nach Anspruch 3, wobei jeder der beiden Schraubenaufnahmeabschnitte (101) mit einer seitlichen Öffnung (103) versehen ist und wobei das zweite Element (200) in dem zweiten Zustand der Schraubverbindungsanordnung durch Drehung um eine Achse relativ zum ersten Element (100) zwischen der ersten Position und der zweiten Position bewegbar ist.

5. Schraubverbindungsanordnung nach Anspruch 4, wobei das erste Element (100) einen Umfangsabschnitt umfasst, der einen ersten C-förmigen Abschnitt (104; 107) und einen zweiten C-förmigen Abschnitt (105; 108) umfasst, die einander zugewandt und durch einen gekrümmten Abschnitt (106; 109) getrennt sind, und wobei der erste und der zweite C-förmige Abschnitt (104, 105; 107, 108) die beiden Schraubenaufnahmeabschnitte (101) bilden.

6. Schraubverbindungsanordnung nach einem der vorhergehenden Ansprüche, wobei die Bohrung (201) als Einsatz (208) ausgebildet ist, der in einem im zweiten Element (200) bereitgestellten Durchgangsloch (209) angeordnet ist.

7. Schraubverbindungsanordnung nach Anspruch 6, wobei der Einsatz (208) einen ersten Teil (210), der mit dem ersten mit Gewinde versehenen Bohrungsabschnitt (202) versehen ist, und einen zweiten Teil (211) umfasst, der mit dem zweiten mit Gewinde versehenen Bohrungsabschnitt (203) versehen ist, und wobei der Einsatz (208) durch konzentrisches Einführen eines des ersten und des zweiten Teils (210; 211) in den jeweils anderen des ersten und des zweiten Teils (211; 210) zusammengesetzt wird.

8. Schraubverbindungsanordnung nach einem der Ansprüche 6 bis 7, wobei der Einsatz (208) durch einen Einformprozess in dem Durchgangsloch (209) angeordnet ist.

9. Schraubverbindungsanordnung nach Anspruch 8, wobei der Einsatz (208) mit einer profilierten oder gestuften Außenhüllfläche versehen ist.

10. Schraubverbindungsanordnung nach einem der Ansprüche 6 bis 9, wobei der Einsatz (208) aus Metall hergestellt ist.

11. Vorrichtung, die mindestens eine Schraubverbindungsanordnung (1; 1', 1") nach einem der vorhergehenden Ansprüche umfasst.

12. Vorrichtung nach Anspruch 11, wobei es sich bei der Vorrichtung um eine Kameravorrichtung (3) handelt.

13. Vorrichtung nach Anspruch 12, wobei das erste Element (100) Teil eines Kameragehäuses (4) der Kameravorrichtung (3) ist und wobei das zweite Element (200) Teil einer Linsenhaltereinheit (7) der Kameravorrichtung (3) ist.

14. Vorrichtung nach Anspruch 13, wobei das erste Element (100) in dem zweiten Zustand der Schraubverbindungsanordnung (1', 1") relativ zu dem ersten Element (100) zwischen der ersten Position und der zweiten Position durch Drehung um eine Achse bewegbar ist, die einer optischen Achse der Linsenhaltereinheit (7) entspricht.

## Revendications

1. Agencement de joint à vis comprenant :
un premier élément (100) pourvu d'au moins une portion de réception de vis (101) ;
un second élément (200) pourvu d'un alésage (201) comprenant une première portion d'alésage filetée (202), une seconde portion d'alésage filetée (203) et une portion d'alésage non filetée (204) séparant la première portion d'alésage filetée (202) et la seconde portion d'alésage filetée (203) ; et
une vis (300) comprenant une tête de vis (301) et une tige de vis (302) pourvue d'une portion de vis filetée (303),
le premier élément (100) étant agencé à côté du second élément (200), la première portion d'alésage filetée (202) de l'alésage (201) du second élément (200) étant proximale par rapport au premier élément (100), et l'agencement de joint à vis étant réglable, par rotation de la vis (300), entre un premier état dans lequel le second élément (200) est fixe par rapport au premier élément (100), et un second état dans lequel le second élément (200) est mobile par rapport au premier élément (100),
dans ledit premier état, l'une parmi l'au moins une portion de réception de vis (101) du premier élément (100) et l'alésage (201) du second élément (200) étant alignés, et la tige de vis (302) s'étendant à travers ladite au moins une portion de réception de vis (101) et dans l'alésage (201), la portion de vis filetée (303) s'engageant dans la seconde portion d'alésage filetée (203) de sorte que le premier élément (100) est serré entre la tête de vis (301) et le second élément (200), et
dans ledit second état, la tige de vis (302) s'étendant à travers la première portion d'alésage filetée (202) de l'alésage (201) et la portion de vis filetée (303) de la tige de vis (302) étant positionnée dans la portion d'alésage non filetée (204) de l'alésage (201).

2. Agencement de joint à vis selon la revendication 1, la portion d'alésage non filetée (204) de l'alésage ayant (201) une première longueur L1 et la portion de vis filetée (303) de la tige de vis (302) ayant une seconde longueur L2, la première longueur L1 de la portion d'alésage non filetée (204) étant supérieure à la seconde longueur L2 de la portion de vis filetée (303).

3. Agencement de joint à vis selon la revendication 1 ou 2, le premier élément (100) comprenant deux portions de réception de vis (101) et le second élément (200), dans ledit second état de l'agencement de joint à vis, étant mobile par rapport au premier élément (100) entre une première position dans laquelle une portion de la tige de vis (302) est positionnée dans l'une desdites deux portions de réception de vis (101) et une seconde position dans laquelle la portion de la tige de vis (302) est positionnée dans l'autre desdites deux portions de réception de vis (101).

4. Agencement de joint à vis selon la revendication 3, chacune des deux portions de réception de vis (101) étant pourvue d'une ouverture latérale (103) et le second élément (200), dans ledit second état de l'agencement de joint à vis, étant mobile par rapport au premier élément (100) entre la première position et la seconde position par rotation autour d'un axe.

5. Agencement de joint à vis selon la revendication 4, le premier élément (100) comprenant une portion périphérique comprenant une première section en forme de C (104 ; 107) et une seconde section en forme de C (105 ; 108) qui sont tournées l'une vers l'autre et séparées par une section incurvée (106 ; 109), et les première et seconde sections en forme de C formant (104, 105 ; 107, 108) lesdites deux portions de réception de vis (101).

6. Agencement de joint à vis selon l'une quelconque des revendications précédentes, l'alésage (201) étant réalisé sous la forme d'un insert (208) agencé dans un trou traversant (209) prévu dans le second élément (200).

7. Agencement de joint à vis selon la revendication 6, l'insert (208) comprenant une première partie (210) pourvue de la première portion d'alésage filetée (202) et une seconde partie (211) pourvue de la seconde portion d'alésage filetée (203), et l'insert (208) étant assemblé par insertion concentrique de l'une des première et seconde parties (210 ; 211) dans l'autre des première et seconde parties (211 ; 210).

8. Agencement de joint à vis selon l'une quelconque des revendications 6 et 7, l'insert (208) étant agencé dans le trou traversant (209) par un procédé de moulage.

9. Agencement de joint à vis selon la revendication 8, l'insert (208) étant pourvu d'une surface d'enveloppe extérieure profilée ou étagée.

10. Agencement de joint à vis selon l'une quelconque des revendications 6 à 9, l'insert (208) étant constitué de métal.

11. Dispositif comprenant au moins un agencement de joint à vis (1 ; 1', 1") selon l'une quelconque des revendications précédentes.

12. Dispositif selon la revendication 11, le dispositif étant un dispositif de caméra (3).

13. Dispositif selon la revendication 12, le premier élément (100) faisant partie d'un corps de caméra (4) du dispositif de caméra (3) et le second élément (200) faisant partie d'une unité de support d'objectif (7) du dispositif de caméra (3).

14. Dispositif selon la revendication 13, le premier élément (100), dans ledit second état de l'agencement de joint à vis (1', 1"), étant mobile par rapport au premier élément (100) entre la première position et la seconde position par rotation autour d'un axe correspondant à un axe optique de l'unité de support d'objectif (7).
